Europäisches Patentamt

European Patent Office

Office européen des brevets

(11) Veröffentlichungsnummer: **0 340 586 B1**

(12) EUROPÄISCHE PATENTSCHRIFT

(45) Veröffentlichungstag der Patentschrift: **11.11.92**

(21) Anmeldenummer: **89107351.2**

(22) Anmeldetag: **24.04.89**

(51) Int. Cl.5: **C08G 18/48**, C08G 18/42, C08G 18/12, C08G 18/10, C09J 175/04

(54) Klebstoffe auf Basis einer Hydroxylgruppen enthaltenden Komponente und einer Isocyanatgruppen enthaltenden Komponente.

(30) Priorität: **05.05.88 DE 3815242**

(43) Veröffentlichungstag der Anmeldung:
**08.11.89 Patentblatt 89/45**

(45) Bekanntmachung des Hinweises auf die Patenterteilung:
**11.11.92 Patentblatt 92/46**

(84) Benannte Vertragsstaaten:
**AT BE CH DE ES FR GB IT LI NL SE**

(56) Entgegenhaltungen:
**EP-A- 0 178 562**
**DE-A- 2 318 440**
**FR-A- 1 214 397**

(73) Patentinhaber: **BAYER AG**

**W-5090 Leverkusen 1 Bayerwerk(DE)**

(72) Erfinder: **Meckel, Walter, Dr.**
**Zonser Strasse 9**
**W-4040 Neuss(DE)**
Erfinder: **Müller-Albrecht, Horst, Dr.**
**Roggendorfstrasse 59**
**W-5000 Koeln 80(DE)**
Erfinder: **Dollhausen, Manfred, Dr.**
**Herzogenfeld 21**
**W-5068 Odenthal(DE)**
Erfinder: **Niederdellmann, Georg, Dr.**
**Heinestrasse 6**
**W-4047 Dormagen(DE)**

**Beschreibung**

Die Erfindung betrifft als Klebstoff geeignete Gemische, deren Verwendung für die Herstellung von Verklebungen, insbesondere für Verbundfolien und Folienverbunde, bei denen wenigstens zwei Folien mit einem erfindungsgemäßen Klebstoff verbunden sind.

Folienverbunde, beispielsweise Verbunde von Polyethylen-, Polyprolyen-, Polyamid-, Polyethylenterephthalat-, Cellophan- oder Aluminiumfolien mit sich selbst oder untereinander werden vorzugsweise unter Verwendung von Polyurethanklebstoffen hergestellt. Bei diesen Klebstoffen handelt es sich in der Regel um feuchtigkeitshärtende Einkomponentensysteme oder um Zweikomponentensysteme auf Basis von Polyurethanen und höherfunktionellen Polyisocyanaten als Vernetzer, die in Form von 10 bis 60 %igen Lösungen in niedrigsiedenen Lösungsmitteln, wie z.B. Ethylacetat oder Aceton, verarbeitet werden (vgl. z.B. DE-A-2 318 440 oder DE-A-3 431 688).

Aus ökologischen und wirtschaftlichen Gründen besteht der Wunsch, auf den Einsatz von Lösungsmitteln ganz zu verzichten. Solche Systeme sind bereits beschrieben (DE-A-2 549 227 oder DE-A-3 529 176), jedoch werden die sehr komplexen Anforderungen, die sich aus der in der Praxis geforderten niedrigen Auftragsmenge von 1 bis max. 10 $g/m^2$ und den geforderten Festigkeiten ergeben, nicht immer erfüllt.

Insbesondere werden hohe Anforderungen an die rheologischen Eigenschaften der Systeme gestellt, die sich auch während der Verarbeitung nicht wesentlich ändern dürfen. Aus diesen Gründen müssen Klebstoffsysteme für die lösungsmittelfreie Herstellung von Folienverbunden eine ausgewogene Reaktivität aufweisen. Auf der einen Seite müssen sie eine ausreichend lange Topfzeit besitzen, um eine problemlose Verarbeitung zu gestatten, auf der anderen Seite aber auch genügend reaktiv sein, um eine rasche Verfestigung zu ermöglichen, damit die Verbunde sofort nach Herstellung eine, für die weitere Handhabung ausreichende Stabilität aufweisen. Außerdem werden von den Folienverbunden ausgezeichnete Langzeiteigenschaften sowohl in der Wärme als auch in Gegenwart von agressiven Medien gefordert.

In der DE-A-2 318 440 werden bereits Produkte beschrieben, die aus Polyetherestern, höherfunktionellen Kettenverlängerern und Diisocyanaten erhalten werden und in Verbindung mit polyfunktionellen Isocyanaten als Vernetzer hervorragende Folienverbunde liefern. Die dort beschriebenen Produkte sind jedoch aus Lösung zu verarbeiten und scheiden somit für ein lösungsmittelfreies Verfahren aus. Auch müssen zur Begrenzung der Viskosität der Polyurethanpolyole bestimmte Reaktionspartner eingehalten werden, da sonst nur schwierig oder nicht verarbeitbare Produkte erhalten werden.

Der Erfindung lag die Aufgabe zugrunde, verbesserte lösungsmittelfreie Klebstoffgemische, insbesondere für Folienverbunde, bereitzustellen.

Gegenstand der Erfindung sind als Klebstoff geeignete flüssige Gemische, enthaltend im wesentlichen wenigstens eine Hydroxylgruppen enthaltende Komponente A und wenigstens eine Isocyanatgruppen enthaltende Komponente B, dadurch gekennzeichnet, daß die Komponente A besteht aus

i) 80 bis 95 Gew.-% eines Hydroxylgruppen enthaltenden Oligourethans Ai) auf Basis von Polyetheresterglykolen des Molekulargewichts 1000 bis 2500 und einem Estergruppengehalt von 4 bis 18 Gew.-% und Diisocyanaten besteht, wobei die Hydroxylzahl zwischen 15 und 75 und der Urethangruppengehalt zwischen 0,6 und 5,0 Gew.-% liegt und

ii) 5 bis 20 Gew.-% eines Hydroxylgruppen enthaltenden Polyethers und/oder Polyetheresters und/oder Polyetherurethans oder aus einer Mischung aus wenigstens einer dieser Komponenten mit einem Polyol mit einer mittleren Funktionalität von mindestens drei, wobei die Komponente Aii ein mittleres Molekulargewicht von 200 bis 1000 und eine mittlere Hydroxylzahl von 200 bis 800 aufweist und wenigstens 30 % der Hydroxylgruppen der Komponente Aii) primäre Hydroxylgruppen sind und

wobei die Mischung von (Ai) und (Aii) eine Hydroxylzahl zwischen 50 und 130 und eine mittlere Funktionalität F von 2,2 bis 2,6 aufweist

und die Komponente B ein Isocyanatgruppen enthaltendes Umsetzungsprodukt aus Polyetheresterglykolen des Molekulargewichts 1000 bis 2500 und einem Diisocyanat, insbesondere einem Diphenylmethandiisocyanat, insbesondere mit einem 4,4'-Isomerengehalt von über 40 % und einem Isocyanatgehalt von 6 bis 13 Gew.-% darstellt.

In einer bevorzugten Ausführungsform hat die Komponente A (Mischung aus den Komponenten Ai und Aii) eine Hydroxylzahl von 60 bis 120. Die mittlere Funktionalität der Komponente A liegt insbesondere zwischen 2,25 und 2,50. In einer weiteren bevorzugten Ausführungsform hat die Komponente B einen Gehalt von freien Isocyanatgruppen von 8 bis 11 Gew.-%.

In einer besonders bevorzugten Ausführungsform ist die Komponente Aii) ein primäre Hydroxylgruppen enthaltender Polyether und/oder Polyetherester und/oder Polyetherurethan.

Gegenstand der Erfindung ist weiterhin die Verwendung der erfindungsgemäßen Gemische für die Herstellung von Verklebungen, insbesondere von Folien für die Herstellung von Verbundfolien.

2

Gegenstand der Erfindung sind weiterhin Verbundfolien aus wenigstens zwei Folien, die unter Verwendung eines erfindungsgemäßen Klebstoffes hergestellt worden sind.

Die mittlere Funktionalität F errechnet sich aus den Funktionalitäten der Einzelkomponenten f(i) und f(ii) und den entsprechenden Molenbrüchen m(i) und m(ii) nach der folgenden Formel

$$F = m(i)^*f(i) + m(ii)^*f(ii)$$

Der Molenbruch ergibt sich aus der Molzahl m der Einzelkomponente durch Division der Gesamtmolzahl aller beteiligten Hydroxykomponenten. Durch die erfindungsgemäße Kombination obiger Polyetheresterglykole als Hydroxyloligourethane und höherfunktionellen Polyolen mit NCO-Prepolymeren auf Basis von Polyetheresterglykolen ist eine überraschende Kombination von guten Eigenschaften erzielt worden, die in keiner Weise vorauszusehen war. So besitzen die Gemische A und B eine ausreichend lange Topfzeit, so daß eine problemlose Verarbeitung auf der Maschine erfolgen kann. Der Verlauf des Klebstoffs auf den Folien ist hervorragend, so daß auch bedruckte Folien optisch einheitliche Folienverbunde liefern. Auf der anderen Seite ist die Viskosität hoch genug, um das gelegentliche "Durchkaschieren" des Klebstoffs durch die in sehr dünnen Aluminiumfolien vorhandenen Mikrolöcher zu verhindern. Die nach kurzer Zeit erreichten Trennfestigkeiten erlauben einer Verarbeitung der noch frischen Folienrollen. Die Endfestigkeiten sind hervorragend, erlauben die Verpackung von agressiven Gütern und sind für die Kurzzeitsterilisierung geeignet.

Bei der Komponente Ai) handelt es sich im wesentlichen um lineare Oligourethane mit vorzugsweise zwei Hydroxylgruppen. Die Komponente Ai) wird insbesondere erhalten aus Polyalkylenetherglykolen des Molekulargewichts 700 bis 2200, die durch basenkatalysierte Addition von Propylen- und/oder Ethylenoxid an bifunktionelle Starter wie z.B. Wasser, Ethylenglykol, 2,2-Bis(4-hydroxyphenyl)-propan, Anilin, 1,4-Dimethylolcyclohexan, Propylenglykol oder Amine erhalten werden und Dicarbonsäuren, vorzugsweise bestehend aus 20 bis 100 Mol-% aromatischer Dicarbonsäuren und 0 bis 80 Mol-% aliphatischer Dicarbonsäuren und primäre Hydroxylgruppen enthaltenden Glykolen des Molekulargewichts 62 bis 200 in einer Schmelzkondensationsreaktion.

In einer bevorzugten Ausführungsform werden Dicarbonsäuren in einer Menge von 1,8 bis 2,5, insbesondere 1,9 bis 2,1 Mol Dicarbonsäure pro Mol Polyetherglykol und 1,8 bis 2,5 Mol Glykol eingesetzt.

Die Schmelzkondensation wird vorzugsweise bei 180 bis 230°C durchgeführt. Es können auch Schleppmittel wie Toluol mitverwendet werden.

Es können beliebige Dicarbonsäuren eingesetzt werden, vorzugsweise sollte der Anteil an aromatischen Dicarbonsäuren 20 Mol-% nicht unterschreiten und der Anteil der aliphatischen Dicarbonsäuren 80 Mol-% nicht überschreiten. Von den aromatischen Dicarbonsäuren kommen insbesondere o-Phthalsäure bzw. Phthalsäureanhydrid, Iso- und Terephthalsäure in Betracht. Es können selbstverändlich auch Gemische der Säuren eingesetzt werden.

Unter den aliphatischen Dicarbonsäuren sind insbesondere die Adipinsäure, Azelainsäure, Sebacinsäure, Bernsteinsäure und Glutarsäure zu nennen, die selbstverständlich auch in Form von Gemischen eingesetzt werden können.

Die Polyalkylenetherglykole können auch mit Hydroxycarbonsäuren bzw. deren inneren Estern umgesetzt werden. In diesem Fall kann auf die Mitverwendung von niedermolekularen Glykolen verzichtet werden. So können beispielsweise durch eine Reaktion eines Polyalkylenetherglykols mit 1,5 bis 2,5 Mol 5-Hydroxycarbonsäure oder Caprolacton zum Aufbau der Komponente A oder B brauchbare Produkte erhalten werden.

Besonders bevorzugt sind Gemische der folgenden Zusammensetzung:
20 bis 100 Mol-% aromatischer Dicarbonsäuren, enthaltend insbesondere:
40 bis 100 Mol-% o-Phthalsäure und
0 bis 60 Mol-% Iso- und/oder Terephthalsäure,
und
0 bis 80 Mol-% Adipinsäure.

Als Glykole kömmen insbesondere Ethylenglykol, 1,2- und 1,3-Propandiol, Butandiol-1,4 und -1,3, Pentandiol, Hexandiol, Neopentylglykol, 1,4-Dimethylolcyclohexan, Di- und Triethylenglykol und Di- und Tripropylenglykol in Betracht, die selbstverständlich auch in Form ihrer Gemische zum Einsatz kommen können.

Wesentlich ist, daß der Gehalt an Estergruppen der Polyetheresterglykole zwischen 4 und 18, bevorzugt zwischen 6 und 15 Gew.-% liegt.

Die so erhaltenen Polyetheresterglykole werden mit 0,1 bis 0,6, bevorzugt 0,2 bis 0,5 Mol eines Diisocyanats pro Mol Polyetheresterglykol zum Hydroxyloligourethan Ai) umgesetzt, das einen Urethangehalt von 0,6 bis 5,0 %, vorzugsweise 0,8 bis 4,5 %, und eine Hydroxylzahl von 15 bis 75 aufweist. Als Diisocyanate kommen insbesondere die aromatischen Diisocyanate wie 2,4-und/oder 2,6-Toluylendiisocyanat und Diphenylmethandiisocyanat mit bis zu 60 Gew.-% des $2,4'$-Isomeren und die aliphatischen Diisocyanate wie z.B. Hexamethylendiisocyanat oder Isophorondiisocyanat in Frage.

Besonders bevorzugt sind die Toluylendiisocyanate und Hexamethylendiisocyanat.

Die Komponente Aii) kann vorzugsweise durch eine basenkatalysierte Addition von Ethylenoxid an trifunktionelle Starter wie z.B. Trimethylolpropan, Glyzerin oder 1,2,6-Trihydroxyhexan erhalten werden. Die primäre Hydroxylgruppen aufweisenden Polyetherpolyole haben vorzugsweise ein Molekulargewicht von 200 bis 500. Diese Polyetherpolyole können gegebenenfalls mit 0,1 bis 0,7, insbesondere 0,3 bis 0,6 Mol einer Dicarbonsäure oder eines Diisocyanats umgesetzt werden. Es resultieren dann Polyetherester bzw. Polyetherurethane mit einer Hydroxylzahl von 150 bis 700, vorzugsweise 160 bis 400. Bevorzugt werden zur Umsetzung Adipinsäure, o-Phthalsäure oder Hexamethylendiisocyanat eingesetzt.

Als Komponente Aii) sind in weiteren Ausführungsformen geeignet:

a) Mischungen der oben angegebenen trifunktionellen Polyole,

b) Mischungen von Triolen mit primären Hydroxylgruppen wie Trimethylolpropan oder Glyzerin mit den oben angegebenen Polyethern, Polyetherestern oder Polyetherurethanen,

c) Mischungen von Triolen mit primären Hydroxylgruppen wie Trimethylolpropan oder Glyzerin mit Polyolen, die sekundäre Hydroxylgruppen aufweisen, und die erhältlich sind aus trifunktionellen Ausgangsverbindungen mit Ethylen- und/oder Propylenoxid,

wobei in allen Ausführungsformen wenigstens 30 % der Hydroxylgruppen in der Komponente Aii) primäre Hydroxylgruppen sind.

25 Gew.-Teile der Komponente Aii) werden gemischt mit 95 bis 80 Gew.-Teilen der Komponente Ai), wobei die so erhaltene Komponente A insbesondere ein bei Raumtemperatur und Temperaturen bis -20°C flüssiges Polyol mit einer Hydroxylzahl von 50 bis 130, vorzugsweise 60 bis 120 ist.

Als Komponente B werden vorzugsweise Umsetzungsprodukte der bei Herstellung von Ai) beschriebenen Polyetheresterglykole des Molekulargewichts 1000 bis 2500 bzw. den daraus durch Umsetzung mit Diisocyanaten erhaltenen Hydroxyloligourethanen mit einer Hydroxylzahl von 15 bis 75, mit einem Diisocyanat, insbesondere Diphenylmethandiisocyanat, das neben dem $4,4'$-Isomeren bis zu 60 Gew.-% des $2,4'$-Isomeren enthalten kann, eingesetzt, wobei pro Mol des polymeren Glykols 2 bis 6 Mol des Diisocyanats verwendet werden. Es resultieren isocyanatendständige Polymere, die bevorzugt einen Isocyanatgehalt von 6 bis 13 Gew.-%, bevorzugt 8 bis 11 Gew.-%, aufweisen.

Es ist auch möglich, statt oder neben einem Diphenylmethandiisocyanat andere Isocyanate zu verwenden, insbesondere Toluoldiisocyanat, Hexamethylendiisocyanat und Isophorondiisocyanat.

Zur Herstellung der bei der Komponente B verwendeten Polyetheresterglykole werden als niedermolekulare Glykole insbesondere Diethylenglykol, Neopentylglykol, Hexandiol bzw. Gemische der Glykole eingesetzt. Der Komponente B können bis zu 10 Gew.-% der gängigen in der Polyurethanchemie verwendeten Polyisocyanate zugesetzt werden, wie beispielsweise flüssige Addukte von Diphenylmethandiisocyanat und Tripropylenglykolen oder Biuret- und/oder Isocyanuratgruppen enthaltende Polyisocyanate auf Basis Hexamethylendiisocyanat oder Isophorondiisocyanat.

Die so erhaltenen isocyanathaltigen Polymeren (Komponente B) sind vorzugsweise bei Raumtemperatur und Temperaturen unterhalb des Gefrierpunktes flüssig und lagerfähig, so daß für den Transport keine aufwendigen Vorsichtsmaßnahmen, wie beispielsweise beheizte Container, notwendig sind.

Die Herstellung kann in einfachen Rührkesseln bei Temperaturen vom Raumtemperatur bis 120°C, bevorzugt 45 bis 90°C, erfolgen.

Zur Verwendung werden die Komponenten A und B im Verhältnis von 100 Teilen A zu 30 bis 350, bevorzugt 50 bis 250 und ganz besonders bevorzugt 75 bis 200 Teilen der Komponente B gemischt und über eine geeignete Maschine auf eine Folienbahn in einer Menge von 0,5 bis 10 g/m$^2$ appliziert. Anschließend wird eine andere Folienbahn über Anpreßwalzen aufkaschiert.

Die mit Isocyanatgruppen reaktionsfähigen Wasserstoffatome in der Komponente A liegen vorzugsweise im Unterschuß zu den Isocyanatgruppen in der Komponente B vor.

Das Verhältnis der mit Isocyanatgruppen reaktionsfähigen Wasserstoffatome in der Komponente A zu den Isocyanatgruppen in der Komponente B sollte vorzugsweise zwischen 1 zu 1,2 bis 1 zu 3,0, bevorzugt zwischen 1 zu 1,5 bis 1 zu 2,25, liegen, wobei für optimale Verbundeigenschaften sowohl die Art der zu verbindenden Folien als auch die äußeren Bedingungen, insbesondere die Luftfeuchtigkeit, von Einfluß sind.

Die Mischung der Komponenten A und B kann per Hand, mit Rühraggregaten oder über Statikmischer erfolgen, wobei die reaktiven Mischungen je nach äußeren Bedingungen wie Luftfeuchtigkeit und Temperatur zwischen einer und mehreren Stunden ohne Qualitätseinbuße verarbeitbar sind. Es ist ein bevorzugtes wesentliches Merkmal der erfindungsgemäßen Produkte, daß sie bei Raumtemperatur gut fließfähige und

4

damit bevorzugt ohne Erwärmung handhabbare Produkte darstellen, die auch in Mischung gut lagerfähig sind und trotzdem nach der Applikation einen raschen Festigkeitsanstieg gewährleisten, so daß kurz nach der Applikation die gefertigten Folienbahnen, beispielsweise zur Herstellung eines Dreierverbundes, handhabbar sind. Auch ändert sich das rheologische Verhalten der Mischungen bei Lagerung über einen, unter Produktionsbedingungen üblichen Maschinenstillstand nicht gravierend, so daß die Auftragsmenge konstant bleibt und die Maschinenparameter konstant gehalten werden können. Die Auftragsmenge beträgt vorzugsweise 0,5 bis 10 g/m$^2$, insbesondere 1 bis 3 g/m$^2$.

Den Gemischen der Komponenten A und B können selbstverständlich die in der Polyurethanchemie oder zur Klebstoffmodifizierung üblichen Zuschlagstoffe, wie Reaktionsbeschleuniger aus der Gruppe der organischen Metallverbindungen oder tertiärer Amine, insbesondere einbaufähiger Produkte wie beispielsweise Trisisopropanolamin in einer Menge von 0,01 bis 0,5 Gew.-%, bezogen auf die Gesamtmischung, Gleitmittel, Farbstoffe, Pigmente oder Füllstoffe, thermoplastische Harze oder Weichmacher zugesetzt werden. Sollten die Zuschlagstoffe isocyanatreaktive Gruppen haben, wie beispielsweise teilweise oder vollständig hydrolysierte Vinylchlorid/Vinylacetat, Homo- oder Mischpolymerisate oder gewisse Polyacrylate, so ist deren Anteil in die Berechnung des Verhältnisses der Komponenten einzubeziehen, um optimale Verbundeigenschaften zu erhalten. In einer bevorzugten Ausführungsform sind die Komponenten A und B in dem erfindungsgemäßen Klebstoff zu wenigstens 90, insbesondere zu wenigstens 95 Gew.-%, enthalten.

Beispiele

Legende

Polyetherpolyole

G-1     Polypropylenetherglykol MG 1000
G-2     Polypropylenetherglykol MG 2000
G-3     Polypropylenetherglykol MG 700
T-1     Polyethylenethertriol MG 300 (primäre OH-Gruppen)
T-2     Polypropylenethertriol MG 350 (sekundäre OH-Gruppen)

Carbonsäuren

S-1     Adipinsäure
S-2     o-Phthalsäure (eingesetzt als Phthalsäureanhydrid)
S-3     Isophthalsäure
S-4     Terephthalsäure (eingesetzt als Dimethylester)
S-5     5-Hydroxycapronsäure (eingesetzt als Caprolacton)

Diole

D-1     Ethylenglykol
D-2     Propandiol-1,2
D-3     Hexandiol-1,6
D-4     Neopentylglykol
D-5     1,4-Dimethylolcyclohexan
D-6     Diethylenglykol
D-7     Tripropylenglykol

Diisocyanate

I-1     Toluylendiisocyanat mit 65 % des 2,4- und 35 % des 2,6-Isomeren
I-2     Diphenylmethandiisocyanat mit mehr als 96 % des 4,4′-Isomeren
I-3     Hexamethylendiisocyanat.

Herstellung der Polyetheresterglykole

1000 g (1 Mol) eines Polypropylenetherglykols (G-1) werden mit 177 g (1,2 Mol) Phthalsäureanhydrid (S-2), 133 g (0,8 Mol) Isophthalsäure (S-3) und 223 g (2 Mol) Diethylenglykol (D-6) unter Zusatz von 15

ppm $SnCl_2 \cdot 2H_2O$ auf 210°C erhitzt.

Nach 28 Stunden wird eine Säurezahl von 0,6 und eine Hydroxylzahl von 69,6 erhalten.

In ähnlicher Weise werden die folgenden Polyetherester erhalten.

Tabelle 1

| | Polyether | Carbonsäure | Diol | OH-Zahl/MG/F | CO$_2$-Gehalt (Gew.-%) |
|---|---|---|---|---|---|
| PE-1 | 1 Mol G-1 | 1,2 Mol S-2 <br> 0,8 Mol S-3 | 2 Mol D-6 | 69,6/1600/2,0 | 11,0 |
| PE-2 | 1 Mol G-1 | 2 Mol S-2 | 2 Mol D-3 | 75 /1500/2,0 | 11,7 |
| PE-3 | 1 Mol G-1 | 2 Mol S-2 | 2 Mol D-1 | 79,2/1420/2,0 | 12,4 |
| PE-4 | 1 Mol G-3 | 2 Mol S-2 | 2 Mol D-1 | 96,3/1165/2,0 | 15,1 |
| PE-5 | 1 Mol G-2 | 2 Mol S-2 | 2 Mol D-1 | 46 /2440/2,0 | 7,2 |
| PE-6 | 1 Mol G-1 | 1 Mol S-1 <br> 1 Mol S-2 | 2 Mol D-1 | 74,6/1500/2,0 | 11,7 |
| PE-7 | 1 Mol G-1 | 1 Mol S-2 <br> 1 Mol S-3 | 2 Mol D-1 | 72,9/1540/2,0 | 11,4 |
| PE-8 | 1 Mol G-1 | 2 Mol S-2 | 2 Mol D-2 | 72,8/1540/2,0 | 11,4 |
| PE-9 | 1 Mol G-1 | 2 Mol S-2 | 2 Mol D-6 | 84,8/1380/2,0 | 12,8 |
| PE-10 | 1 Mol G-1 | 2 Mol S-2 | 1 Mol D-1 <br> 1 Mol D-5 | 77,6/1450/2,0 | 12,1 |
| PE-11 | 1 Mol G-1 | 2 Mol S-2 | 2 Mol D-7 | 65,6/1710/2,0 | 10,3 |

Tabelle 1 (Fortsetzung)

| | Polyether | Carbonsäure | Diol | OH-Zahl/MG/F | CO$_2$-Gehalt (Gew.-%) |
|---|---|---|---|---|---|
| PE-12 | 1 Mol G-3 | 2 Mol S-2 | 1,5 Mol D-3<br>0,5 Mol D-4 | 76,6/1460/2,0 | 12,1 |
| PE-13 | 1 Mol G-1 | 2 Mol S-1 | 0,5 Mol D-3<br>1,5 Mol D-4 | 75 /1500/2,0 | 11,7 |
| PE-14 | 1 Mol G-1 | 0,5 Mol S-4<br>1,5 Mol S-1 | 1,5 Mol D-3<br>0,5 Mol D-4 | 72 /1560/2,0 | 11,3 |
| PE-15 | 1 Mol G-1 | 2 Mol S-5 | - | 88 /1280/2,0 | 6,8 |
| PE-16 | 1 Mol T-1 | 0,5 Mol S-1 | - | 313 / 717/4,0 | |
| PE-17 | 1 Mol T-1 | 0,5 Mol S-2 | - | 307 / 720/4,0 | |
| PE-18 | 1 Mol T-1 | 0,5 Mol I-3 | - | 305 / 735/4,0 | |
| PE-19 | 1 Mol G-1 | 0,5 Mol S-1 | - | 52,5/2140/2,0 | 2,1 |
| PE-20 | 1 Mol T-2 | 0,5 Mol S-1 | - | 277 / 810/4,0 | |

Erläuterung:

OH-Zahl/MG/F und CO$_2$-Gehalt beziehen sich auf den erhaltenen Polyetheresterglykol. MG steht für Molekulargewicht und F für die Funktionalität.

Die Polyole PE-1 bis PE-15 sind erfindungsgemäß zum Aufbau der Komponenten Ai) zu verwenden.

Die Polyole PE-16 bis PE-18 sind erfindungsgemäß in der Komponente Aii) zu verwenden.

PE-19 und PE-20 sind nicht erfindungsgemäß.

7

Herstellung der Hydroxylkomponente A

1420 g (1 Mol) des Polyetheresters PE-3 werden mit 52,5 g (0,3 Mol) Toluylendiisocyanat (I-1) unter Stickstoff bei 120°C bis zur NCO-Freiheit reagiert unter Erhalt der Komponente Ai). Anschließend wird auf 50°C abgekühlt und 147,25 g des Polyetheresters PE-16 eingerührt.

Man erhält eine bei Raumtemperatur flüssige Komponente A der Hydroxylzahl (OH-Zahl) 77,0 und einer mittleren Funktionalität von 2,45. In ähnlicher Weise werden die folgenden Komponenten A erhalten.

<u>Tabelle 2</u>

| | | | Ai | | | |
|---|---|---|---|---|---|---|
| | Polyetherester | Diisocyanat | OH-Zahl | Urethangruppen-gehalt (Gew.-%) | Zusatz Aii) | OH-Zahl/F |
| A-1 | 1420 g PE-3 | 52,5 g I-1 | 53,3 | 2,4 | 147,25 g PE-16 | 77 /2,45 |
| A-2 | 1420 g PE-3 | 17,5 g I-1 | 70,2 | 0,8 | 143,7 g T-1 | 113,7 /2,34 |
| A-3 | 1420 g PE-3 | 17,5 g I-1 | 70,2 | 0,8 | 143,7 g PE-16 | 92,3 /2,36 |
| A-4 | 1420 g PE-3 | 17,5 g I-1 | 70,2 | 0,8 | 143,7 g PE-18 | 92 /2,36 |
| A-5 | 1500 g PE-6 | 17,5 g I-1 | 66,5 | 0,8 | 152 g PE-16 | 89 /2,38 |
| A-6 | 1600 g PE-1 | 52,5 g I-1 | 47,5 | 2,1 | 165 g T-1 | 93,1 /2,38 |
| A-7 | 1420 g PE-3 | 67,2 g I-3 | 45,3 | 3,2 | 148,7 g PE-18 | 68,9 /2,45 |
| A-8 | 1560 g PE-14 | 52,5 g I-1 | 48,7 | 2,2 | 161 g PE-16 | 72,7 /2,37 |
| A-9 | 1280 g PE-15 | 52,5 g I-1 | 58,9 | 2,7 | 133 g PE-16 | 82 /2,31 |
| A-10 | 1420 g PE-3 | 17,5 g I-1 | 70,2 | 0,8 | --- | 70,3 /2,0 |
| A-11 | 1420 g PE-3 | 17,5 g I-1 | 70,2 | 0,8 | 143,7 g T-2 | 107,5 /2,3 |
| A-12 | 1420 g PE-3 | 17,5 g I-1 | 70,2 | 0,8 | 36 g TMP | 99,2 /2,23 |
| A-13 | 1420 g PE-3 | 17,5 g I-1 | 70,2 | 0,8 | 143,7 g PE-20 | 89 /2,33 |
| A-14 | 1420 g PE-3 | 17,5 g I-1 | 70,2 | 0,8 | 431,2 g PE-16 | 126,3 /2,80 |
| A-15 | 2140 g PE-19 | 17,5 g I-1 | 46,8 | 0,5 | 215 g PE-16 | 71 /2,46 |
| A-16 | 1420 g PE-3 | - | 79,2 | - | 142 g T-2 | 100,5 /2,33 |
| A-17 | 1600 g PE-1 | 52,5 g I-1 | 47,5 | 2,1 | 131 g T-2 | 101 /2,34 |
| | | | | | 34 g TMP | |

TMP = Trimethylolpropan

Die Komponenten A-1 bis A-9 und A-17 sind erfindungsgemäß.

Herstellung der Komponente B

Zu 975 g (3,9 Mol) Diphenylmethandiisocyanat (I-2) mit einem 4,4'-Isomerengehalt von mind. 97 Gew.-% werden bei 50 bis 60°C unter Stickstoff 1420 g (1 Mol) des Polyetheresters PE-3 unter Rühren eingetragen. Bei ca. 60°C wird die Reaktion bis zum Erreichen eines konstanten NCO-Gehaltes von 9,4 Gew.-% fortgeführt.

Man erhält ein bei Raumtemperatur und -20°C flüssiges und lagerstabiles Prepolymer.

In ähnlicher Weise werden die folgenden Produkte erhalten.

Tabelle 3

|  | Polyetherester | Diisocyanat | Gew.-% NCO |
|---|---|---|---|
| B-1 | 1420 g PE-3 | 975 g I-2 | 9,4 |
| B-2 | 1600 g PE-1 | 935 g I-2 | 10,0 |
| B-3 | 1420 g PE-3 | 930 g I-2 | 10,1 |
|  |  | 70,5 g PF |  |
| B-4 | 1420 g PE-3 | 50 g I-3 | 8,4 |
| PF = Polyisocyanat aus I-2 und Tripropylenglykol (NCO-Gehalt 23 Gew.-%). | | | |

Herstellung der Klebstoffmischungen

Die folgenden Mischungen wurden hergestellt:

Tabelle 4

|  | Komponente A | Komponente B | Zusatz | NCO/OH | Topfzeit |
|---|---|---|---|---|---|
| M-1 | 100 g A-1 | 91,5 g B-1 | - | 1,5 | >60 min. |
| M-2 | 100 g A-1 | 122,5 g B-1 | - | 2,0 | >60 min. |
| M-3 | 100 g A-1 | 115,3 g B-2 | - | 2,0 | >60 min. |
| M-4 | 100 g A-1 | 114,1 g B-3 | - | 2,0 | >60 min. |
| M-5 | 100 g A-3 | 159,6 g B-1 | 0,9 g TPA | 2,0 | >60 min. |
| M-6 | 100 g A-6 | 138 g B-2 | - | 2,0 | >60 min. |
| M-7 | 100 g A-8 | 108 g B-2 | - | 2,0 | >60 min. |
| M-8 | 100 g A-9 | 122,7 g B-2 | - | 2,0 | >60 min. |
| M-9 | 100 g A-7 | 144 g B-4 | 1,5 g TPA | 2,0 | >60 min. |
| M-10 | 100 g A-10 | 111,9 g B-1 | - | 2,0 | >60 min. |
| M-11 | 100 g A-11 | 171 g B-1 | - | 2,0 | >60 min. |
| M-12 | 100 g A-12 | 157,9 g B-1 | - | 2,0 | >60 min. |
| M-13 | 100 g A-13 | 141,5 g B-1 | - | 2,0 | >60 min. |
| M-14 | 100 g A-14 | 201 g B-1 | - | 2,0 | <30 min. |
| M-15 | 100 g A-15 | 106,3 g B-2 | - | 2,0 | >60 min. |
| M-16 | 100 g A-16 | 160,1 g B-1 | - | 2,0 | >60 min. |
| M-17 | 100 g A-17 | 151 g B-2 | - | 2,0 | >60 min. |
| TPA = Trisisopropanolamin | | | | | |

Die Topfzeit ist definiert als die Zeit, in der sich die Viskosität des Systems bei 30°C verdoppelt.

Die Mischungen M-1 bis M-9 und M-17 sind erfindungsgemäß.

Herstellung der Verbunde

Innerhalb eines Zeitraumes von 60 Minuten werden die in Tabelle 4 aufgeführten Klebstoffe zur Herstellung von Folienverbunden verarbeitet.

Die Folienverbundherstellung erfolgte in diesem Falle mit einer Varicoater-LF-Anlage der Fa. Windmöller u. Hölscher, aber auch andere Anlagen sind geeignet. Der Klebstoffauftrag betrug ca. 2 g/m² bei einer Laufgeschwindigkeit von ca. 100 m/min. Der Klebstoff wurde zur besseren Verarbeitung im Walzenspalt auf ca. 40°C erwärmt. Vor dem Kaschieren wurde die mit Klebstoff versehene Folie ca. 2 Sekunden über eine auf 80°C erwärmte Walze geführt und dann unter Anpreßdruck zweier Gummiwalzen mit der zweiten Folie verbunden. Auftragsmengen, Laufgeschwindigkeiten und Temperaturen sind variabel.

Die Verbundfestigkeiten (N/15 mm) werden 24 Stunden und 30 Tage nach der Kaschierung im Schälversuch bei einem Reißwinkel von 90° und einer Reißgeschwindigkeit von 100 mm/min. ermittelt.

Es wurden die folgenden Folienverbunde hergestellt:

| Verbund A | Aluminium (40 μm) |
| | Polyethylenterephthalat (50μm) |
| Verbund B | Aluminium (40 μm) |
| | Polypropylen (50 μm) |
| Verbund C | Polyamid (50 μm) |
| | Polyethylen (50 μm) |
| Verbund D | Polypropylen (50 μm) |
| | Polyethylen (50 μm) |

Die ermittelten Verbundfestigkeiten (N/15 mm) werden in Tabelle 5 mitgeteilt. Die Beispiele 1 bis 9 und 17 sind erfindungsgemäß.

## Tabelle 5

| | Misch. | A | | B | | C | | D | |
|---|---|---|---|---|---|---|---|---|---|
| | | 24 h/30 d | | 24 h/30 d | | 24 h/30 d | | 24 h/30 d | |
| 1 | M-1 | 2,0 | + | 2,4 | 4,9 | 5,8 | 7,0 | 2,9 | 5,5 |
| 2 | M-2 | 2,4 | + | 2,4 | 4,5 | 4,8 | + | 3,8 | + |
| 3 | M-3 | 2,8 | 4,8 | 2,2 | 5,2 | 4,0 | 6,0 | + | + |
| 4 | M-4 | 3,1 | + | 2,9 | 5,5 | 3,8 | + | 5,0 | + |
| 5 | M-5 | 3,6 | 5,6 | 3,2 | 6,1 | 3,3 | + | 6,3 | 8,9 |
| 6 | M-6 | 2,9 | + | 3,5 | 6,5 | 3,6 | + | 5,0 | + |
| 7 | M-7 | 3,2 | + | 3,8 | 7,1 | 4,5 | + | 5,1 | + |
| 8 | M-8 | 2,4 | 5,1 | 2,6 | 5,1 | 3,1 | 7,2 | 2,6 | 6,5 |
| 9 | M-9 | 1,9 | + | 2,1 | 4,2 | 3,8 | + | 5,3 | + |
| 10 | M-10 | 0,3 | 0,6 | 0,8 | 1,0 | 0,6 | 1,4 | 1,0 | 2,0 |
| 11 | M-11 | 0,9 | 1,2 | 1,8 | 2,0 | 1,1 | 1,5 | 2,2 | 3,0 |
| 12 | M-12 | 0,9 | 1,9 | 2,1 | 1,4 | 1,2 | 1,8 | 2,6 | 2,4 |
| 13 | M-13 | 1,0 | 1,6 | 2,2 | 2,0 | 1,4 | 2,0 | 3,4 | 3,6 |
| 14 | M-14 | 4,0 | 2,2 | 3,1 | 3,3 | 4,7 | 5,0 | 6,5 | 5,8 |

### Tabelle 5 (Fortsetzung)

| Misch. | A | | B | | C | | D | |
|---|---|---|---|---|---|---|---|---|
| | 24 h/30 d | | 24 h/30 d | | 24 h/30 d | | 24 h/30 d | |
| 15 M-15 | 1,8 | 3,3 | 1,8 | 3,1 | 2,5 | 4,0 | 2,5 | 4,0 |
| 16 M-16 | 1,0 | + | 1,4 | 4,9 | 2,1 | + | 2,0 | 4,8 |
| 17 M-17 | 2,2 | 5,1 | 2,6 | 5,4 | 5,1 | + | 4,6 | 9,5 |

+ = Folienabriß

M10 - M13; M15 + M16: geringe Anfangsfertigkeiten

M14: geringe Topfzeit und Abfall der Werte nach 30 d.

**Patentansprüche**

1. Flüssiges, als Klebstoff geeignetes Gemisch, enthaltend im wesentlichen wenigstens eine Hydroxylgruppen enthaltende Komponente A und wenigstens eine Isocyanatgruppen enthaltende Komponente B, dadurch gekennzeichnet, daß die Komponente A aus

   i) 80 bis 95 Gew.-% eines Hydroxylgruppen enthaltenden Oligourethans Ai) auf Basis von Polyetheresterglykolen des Molekulargewichts 1000 bis 2500 und einem Estergruppengehalt von 4 bis 18 Gew.-% und Diisocyanaten besteht, wobei die Hydroxylzahl zwischen 15 und 75 und der Urethangruppengehalt zwischen 0,6 und 5,0 Gew.-% liegt und

   ii) 5 bis 20 Gew.-% eines Hydroxylgruppen enthaltenden Polyethers und/oder Polyetheresters und/oder Polyetherurethans oder aus einer Mischung aus wenigstens einer dieser Komponenten mit einem Polyol mit einer mittleren Funktionalität von mindestens drei, wobei die Komponente Aii) ein mittleres Molekulargewicht von 200 bis 1000 und einer mittlere Hydroxylzahl von 200 bis 800 aufweist und wenigstens 30 % der Hydroxylgruppen der Komponente Aii) primäre Hydroxylgruppen sind und

   wobei die Mischung von (Ai) und (Aii) eine Hydroxylzahl zwischen 50 und 130 und eine mittlere Funktionalität F von 2,2 bis 2,6 aufweist

   und die Komponente B ein Isocyanatgruppen enthaltendes Umsetzungsprodukt aus Polyetheresterglykolen des Molekulargewichts 1000 bis 2500 und einem Diisocyanat ist, wobei B einen Isocyanatgehalt von 6 bis 13 Gew.-% aufweist.

2. Gemisch nach Anspruch 1, dadurch gekennzeichnet, daß die Komponente Aii) wenigstens ein primäre Hydroxylgruppen enthaltender Polyether und/oder Polyetherester und/oder Polyetherurethan ist.

3. Gemisch nach Anspruch 1, dadurch gekennzeichnet, daß die zum Aufbau der verwendeten Hydroxyloligourethane Ai) und Komponente B verwendeten Polyetheresterglykole durch Umsetzung von einem Mol Polyether mit

   1,8 bis 2,5 Mol Dicarbonsäure und

   1,8 bis 2,5 Mol eines Glykols vom Molekulargewicht 62 bis 200 erhalten werden.

4. Gemisch nach wenigstens einem der vorhergehenden Ansprüche, dadurch gekennzeichnet, daß die verwendeten Dicarbonsäuren zu

   20 bis 100 Mol-% aus aromatischen und

   0 bis 80 Mol-% aus aliphatischen Dicarbonsäuren

   bestehen.

**5.** Gemisch nach wenigstens einem der vorhergehenden Ansprüche, dadurch gekennzeichnet, daß die Komponente Aii) ein auf Trimethylolpropan gestarteter Ethylenoxidpolyester des Molekulargewichts 200 bis 400 darstellt.

**6.** Gemisch nach wenigstens einem der vorhergehenden Ansprüche, dadurch gekennzeichnet, daß die Komponente Aii) ein Umsetzungsprodukt von 1 Mol eines auf Trimethylolpropan gestarteten Ethylenoxidpolyethers vom Molekulargewicht 200 bis 500 mit 0,1 bis 0,7 Mol einer Dicarbonsäure oder eines Diisocyanats ist.

**7.** Gemisch nach wenigstens einem der vorhergehenden Ansprüche, dadurch gekennzeichnet, daß das in der Komponente B verwendete Isocyanat ein Diphenylmethandiisocyanat mit einem Gehalt von mindestens 40 % des 4,4′-Isomeren ist.

**8.** Gemisch nach Anspruch 1 und 5, dadurch gekennzeichnet, daß pro Mol des Polyalkylenetherglykols 1,5 bis 2,5 Mol einer Hydroxycarbonsäure bzw. des entsprechenden cyclischen Esters eingesetzt werden.

**9.** Gemisch nach wenigstens einem der vorhergehenden Ansprüche, dadurch gekennzeichnet, daß die mittlere Funktionalität der Komponente A zwischen 2,25 und 2,50 liegt.

**10.** Folienverbunde aus wenigstens zwei Folien, dadurch gekennzeichnet, daß wenigstens zwei Folien mit einem Klebstoff gemäß Anspruch 1 bis 8 verbunden worden sind.

**Claims**

**1.** A liquid mixture suitable as an adhesive essentially containing at least one hydroxyfunctional component A and at least one component B containing isocyanate groups, characterized in that component A consists of
i) 80 to 95% by weight of a hydroxyfunctional oligourethane Ai) based on polyether ester glycols having a molecular weight in the range from 1,000 to 2,500 and an ester group content of 4 to 18% by weight and diisocyanates, the hydroxyl value being between 15 and 75 and the urethane group content being between 0.6 and 5.0% by weight and
ii) 5 to 20% by weight of a hydroxyfunctional polyether and/or polyether ester and/or polyether urethane or of a mixture of at least one of these components with a polyol having an average functionality of at least three,
component Aii) having an average molecular weight of 200 to 1,000 and an average hydroxyl value of 200 to 800 and at least 30% of the hydroxyl groups of component Aii) being primary hydroxyl groups and
the mixture of (Ai) and (Aii) having a hydroxyl value of 50 to 130 and an average functionality F of 2.2 to 2.6 and
component B being a reaction product containing isocyanate groups of polyether ester glycols having a molecular weight of 1,000 to 2,500 and a diisocyanate, B having an isocyanate content of 6 to 13% by weight.

**2.** A mixture as claimed in claim 1, characterized in that component Aii) is at least one polyether and/or polyether ester and/or polyether urethane containing primary hydroxyl groups.

**3.** A mixture as claimed in claim 1, characterized in that the polyether ester glycols used in the synthesis of the hydroxyloligourethanes Ai) and component B are obtained by reaction of one mol polyether with 1.8 to 2.5 mol dicarboxylic acid and
1.8 to 2.5 mol of a glycol having a molecular weight of 62 to 200.

**4.** A mixture as claimed in at least one of the preceding claims, characterized in that 20 to 100 mol-% of the dicarboxylic acids used consist of aromatic dicarboxylic acids and 0 to 80 mol-% of aliphatic dicarboxylic acids.

**5.** A mixture as claimed in at least one of the preceding claims, characterized in that component Aii) is a trimethylol-propane-started ethylene oxide polyester having a molecular weight of 200 to 400.

**6.** A mixture as claimed in at least one of the preceding claims, characterized in that component Aii) is a reaction product of 1 mol of a trimethylol-propane-started ethylene oxide polyether having a molecular weight of 200 to 500 with 0.1 to 0.7 mol of a dicarboxylic acid or a diisocyanate.

**7.** A mixture as claimed in at least one of the preceding claims, characterized in that the isocyanate used in component B is a diphenylmethane diisocyanate having a content of at least 40% of the 4,4'-isomer.

**8.** A mixture as claimed in claims 1 and 5, characterized in that 1.5 to 2.5 mol of a hydroxycarboxylic acid or the corresponding cyclic ether are used per mol of the polyalkylene ether glycol.

**9.** A mixture as claimed in at least one of the preceding claims, characterized in that the average functionality of component A is between 2.25 and 2.50.

**10.** Composite films of at least two films, characterized in that at least two films are bonded with the adhesive claimed in claims 1 to 8.

**Revendications**

**1.** Mélange liquide convenant comme adhésif, contenant principalement au moins un composant A contenant des groupes hydroxyle et au moins un composant B contenant des groupes isocyanate, caractérisé en ce que le composant A est constitué
    i) de 80 à 95 % en poids d'un oligouréthanne Ai) contenant des groupes hydroxyle, à base de polyéther-esterglycols d'un poids moléculaire de 1000 à 2500 et de teneur en groupes esters de 4 à 18 % en poids et de diisocyanates, l'indice d'hydroxyle étant compris entre 15 et 75 et la teneur en groupes uréthanne se situant entre 0,6 et 5,0 % en poids, et
    ii) de 5 à 20 % en poids d'un polyéther et/ou d'un polyéther-ester et/ou d'un polyéther-uréthanne contenant des groupes hydroxyle ou d'un mélange d'au moins l'un de ces composants avec un polyol ayant une fonctionnalité moyenne au moins égale à trois, le composant Aii) ayant un poids moléculaire moyen de 200 à 1000 et un indice d'hydroxyle moyen de 200 à 800, et au moins 30 % des groupes hydroxyle du composant Aii) étant des groupes hydroxyle primaires, et
    le mélange de (Ai) et (Aii) présente un indice d'hydroxyle compris entre 50 et 130 et une fonctionnalité moyenne F de 2,2 à 2,6,
    et le composant B est un produit de réaction, porteur de groupes isocyanate, de polyéther-ester-glycols d'un poids moléculaire de 1000 à 2500 et d'un diisocyanate, B présentant une teneur en isocyanate de 6 à 13 % en poids.

**2.** Mélange suivant la revendication 1, caractérisé en ce que le composant Aii) est au moins un polyéther et/ou un polyéther-ester et/ou un polyéther-uréthanne contenant des groupes hydroxyle primaires.

**3.** Mélange suivant la revendication 1, caractérisé en ce que les polyéther-ester-glycols servant à l'édification des hydroxy-oligo-uréthannes Ai) et du composant B utilisés sont obtenus par réaction d'une mole de polyéther avec
    1,8 à 2,5 moles d'acide dicarboxylique et
    1,8 à 2,5 moles d'un glycol d'un poids moléculaire de 62 à 200.

**4.** Mélange suivant au moins l'une des revendications précédentes, caractérisé en ce que les acides dicarboxyliques utilisés sont constitués
    de 20 à 100 moles % d'acides dicarboxyliques aromatiques et
    de 0 à 80 moles % d'acides dicarboxyliques aliphatiques.

**5.** Mélange suivant au moins l'une des revendications précédentes, caractérisé en ce que le composant Aii) représente un éthylène-oxyde-polyester amorcé sur triméthylolpropane, d'un poids moléculaire de 200 à 400.

**6.** Mélange suivant au moins l'une des revendications précédentes, caractérisé en ce que le composant Aii) est un produit de réaction d'une mole d'un éthylèneoxyde-polyéther amorcé sur triméthylolpropane d'un poids moléculaire de 200 à 500 avec 0,1 à 0,7 mole d'un acide dicarboxylique ou d'un diisocyanate.

**7.** Mélange suivant au moins l'une des revendications précédentes, caractérisé en ce que l'isocyanate utilisé dans le composant B est un diisocyanatodiphénylméthane contenant au moins 40 % de l'isomère 4,4'.

**8.** Mélange suivant les revendications 1 et 5, caractérisé en ce qu'on utilise par mole du polyalkylèneéthergylcol 1,5 à 2,5 moles d'un acide hydroxycarboxylique ou de l'ester cyclique correspondant.

**9.** Mélange suivant au moins l'une des revendications précédentes, caractérisé en ce que la fonctionnalité moyenne du composant A se situe entre 2,25 et 2,50.

**10.** Assemblages d'au moins deux feuilles, caractérisés en ce qu'au moins deux feuilles ont été liées avec un adhésif suivant les revendications 1 à 8.